# EUROPÄISCHE PATENTANMELDUNG

(11) **EP 4 851 256 A1**
(43) Veröffentlichungstag der Anmeldung: **09.12.2026**
(21) Anmeldenummer: 26180947.9
(22) Anmeldetag: 26.05.2026
(51) Int. Cl.: C09D 5/00

(54) **SPRÜHBARE ZUSAMMENSETZUNG, BESCHICHTUNG, BESCHICHTETER GEGENSTAND UND VERFAHREN**

(30) Priorität: 02.06.2025 AT 503822025
(71) Anmelder: Borkenstein & Borkenstein Fachärzte für Augenheilkunde OG, 8010 Graz (AT)
(72) Erfinder: Borkenstein, Andreas, 8010 Graz (AT); Borkenstein, Eva-Maria, 8010 Graz (AT)
(74) Vertreter: Puchberger & Partner Patentanwälte

(57) **Zusammenfassung**

Die Erfindung betrifft eine sprühbare Zusammensetzung enthaltend oder bestehend aus einer wässrigen Kautschuk-Suspension, Polyvinylpyrrolidon sowie gegebenenfalls einem oder mehreren Additiven, wobei die Zusammensetzung bezogen auf ihre Gesamtmasse zwischen 20 Gew.-% und 45 Gew.-% Kautschuk sowie von 0,5 Gew.-% bis 10 Gew.-%, insbesondere von 1,0 Gew.-% bis 5 Gew.-%, Polyvinylpyrrolidon enthält. Die Erfindung betrifft ferner eine Beschichtung, einen beschichteten Gegenstand sowie ein Verfahren zur Herstellung einer solchen reversiblen Beschichtung.

## Beschreibung

Die Erfindung betrifft eine sprühbare Zusammensetzung insbesondere zur Herstellung opaker bzw. lichtundurchlässiger Beschichtungen. Die Zusammensetzung eignet sich insbesondere zur reversiblen optischen Abschirmung von Oberflächen, wie z.B. Glas, Kunststoffplatten oder optischen Linsen, und kann unter anderem als Sichtschutz, temporärer Filter oder technische Abdeckschicht verwendet werden.

Im industriellen und medizinischen Umfeld besteht Bedarf an leicht applizierbaren, temporären Beschichtungslösungen, die Flächen vor Lichtdurchtritt, Einblick oder UV-Strahlung schützen, sich aber später rückstandsfrei entfernen lassen. Ein konkreter Anwendungsfall ist die Abschattung eines Brillenglases bei Anisometropie, Amblyopie sowie Doppelbildern unterschiedlichster Ursachen oder auch nach der Operation eines Auges. Andere Anwendungsfälle sind zum Beispiel der Sonnenschutz auf Fenstern sowie diversen glatten Oberflächen oder LCD Displays (Uhren, Anzeigesysteme von Geräten) und dergleichen.

In vielen Anwendungen werden derzeit permanente oder schwer lösliche Materialien eingesetzt (z.B. lichtundurchlässige Folien, Einwegmasken oder Beschichtungen), die oft nicht rückstandsfrei entfernbar sind und auch keine biologische Abbaubarkeit aufweisen oder sogar toxisch für Mensch und Tier sein können.

Dies ist insofern nachteilig, als derartige Lösungen auch komplex herzustellen sind und typischerweise spezielle Kenntnisse und Fertigkeiten sowie spezielle Vorrichtungen zum Zuschneiden, Verarbeiten oder Aufbringen dieser Abdeckungen erforderlich sind. Im Rahmen der vorliegenden Erfindung wurde es daher als zielführend erachtet, zumindest einige der genannten Nachteile des Standes der Technik durch Bereitstellung einer Zusammensetzung zu überwinden, die auf eine abzudeckende Oberfläche aufsprühbar ist.

Eine Aufgabe der Erfindung kann daher darin gesehen werden, eine derartige Zusammensetzung bereitzustellen. Diese sprühbare Zusammensetzung sollte vorteilhafterweise eine oder mehrere der folgenden Eigenschaften aufweisen:
- Applizierbarkeit durch einfaches Aufsprühen
- Bildung einer deckenden Filmschicht nach kurzer Trocknungs- und/oder Härtungzeit
- im Wesentlichen rückstandsfreie Entfernbarkeit
- Umweltfreundlichkeit / biologische Abbaubarkeit
- im Wesentlichen keine gesundheitliche Bedenklichkeit

Nach Durchführung systematischer Vergleichsversuche mit unterschiedlichen Polymeren wurde die Verwendung von Latex als generelle Lösung für diese Aufgabe als geeignetes Mittel befunden. Latex ist ein seit Langem bekannter, meist auch biologisch abbaubarer, Werkstoff mit guten Filmbildungseigenschaften und Barrierebildung. Er wird zum Beispiel bei der Herstellung medizinischer Handschuhe oder elastischer Folien verwendet.

Es wurde gefunden, dass Latex in Alleinstellung für die gewünschte Anwendung ungeeignet ist, was insbesondere an der unzureichenden mechanischen Festigkeit einer aus dem Latex hergestellten Beschichtung liegt.

Überraschenderweise kann die mechanische Festigkeit von aus Latex hergestellten Beschichtungen durch Zugabe von Polyvinylpyrrolidon erhöht werden. Hierbei kann es sich insbesondere um Polyvinylpyrrolidon (PVP) handeln, das ein Molekulargewicht von höchstens 10.000 g/mol aufweist.

In einem generellen Aspekt betrifft die vorliegende Erfindung also eine insbesondere sprühbare Zusammensetzung, die Latex und Polyvinylpyrrolidon enthält.

Latex (auch als Latexmilch) bezeichnet in Zusammenhang mit der vorliegenden Offenbarung generell eine wässrige Kautschuk-Suspension, die aus natürlichen oder synthetischen Quellen stammen kann. Hauptbestandteil des Latex sind neben Wasser typischerweise kolloidal vorliegende Polymere, die in einem Gehalt von zwischen 20 Gew.-% und 50 Gew.-% in Bezug auf das Gesamtgewicht des Latex vorliegen können.

Latex kann Naturlatex und synthetischen Latex umfassen, wobei Naturlatex insbesondere aufgrund dessen biologischer Abbaubarkeit im Rahmen der vorliegenden Erfindung als bevorzugt angesehen wird. In Naturlatex sind die Polymere vornehmlich cis-1,4-Polyisopren (auch als Kautschuk bezeichnet), das in einem Molekulargewichtsbereich zwischen 100.000 und 1.000.000 g/mol vorliegen kann.

Insbesondere handelt es sich bei Naturlatex um den Milchsaft von *Hevea brasiliensis,* wobei das Polymer hier typischerweise neben kleineren Mengen an Harzen, Proteinen, Zuckern und Mineralstoffen vorliegt. Ammoniak kann dem Latex zugesetzt werden, um mikrobielle Aktivitäten hintanzuhalten und den Latex zu stabilisieren. Andere Zusätze oder Stabilisierungsmittel sind bekannt und möglich.

Das Polyvinylpyrrolidon kann dem Latex bzw. der Zusammensetzung in einer gewissen Menge zugesetzt werden, wie beispielsweise höchstens 10 Gew.-% oder höchstens 5 Gew.-% in Bezug auf das Gesamtgewicht der Zusammensetzung. Die Mindestmenge kann 0,5 Gew.-% oder 1 Gew.-% betragen.

Vorteilhaft bei der Verwendung von Polyvinylpyrrolidon ist nicht nur die Verbesserung der mechanischen Eigenschaften einer aus der Zusammensetzung hergestellten Beschichtung, sondern auch die Tatsache, dass PVP generell für Menschen und Tiere als gesundheitlich unbedenklich und auch für den Einsatz bei Lebensmittelanwendungen zugelassen ist. Es kann sich bei dem PVP um PVP mit einem niedrigen Molekulargewicht handeln.

Eine derartige Zusammensetzung ist sprühbar und kann nach dem Auftrag auf eine Oberfläche durch Lufttrocknung innerhalb weniger Minuten ausgehärtet werden.

Ferner ist die Zusammensetzung in einer bevorzugten Ausführung nicht toxisch und/oder biobasiert.

Optional können ein oder mehrere weitere Additive in die Zusammensetzung eingearbeitet werden, um eine Anpassung an bestimmte Verwendungsszenarien oder eine weitere Verbesserung ihrer Eigenschaften zu erreichen.

Gegebenenfalls kann der Zusammensetzung ein Photoinitiator zugegeben werden, um eine UV-Härtungsreaktion in der Zusammensetzung zu initiieren und die mechanischen Eigenschaften der Beschichtung weiter zu verbessern. Bei dem Photoinitiator kann es sich um Ethyl-(2,4,6-trimethyobenzoyl)-phenylphosphinat (TPO) handeln.

Die Konzentration des Photoinitiators kann wenigstens 0,2 Gew.-% oder wenigstens 0,5 Gew.-%, jedoch typischerweise weniger als 1 Gew.-%, in Bezug auf das Gesamtgewicht der Zusammensetzung betragen.

Die Bildung der Beschichtung kann dann durch Bestrahlung der aufgesprühten Zusammensetzung mit einer UV-Lampe über einen Zeitraum von wenigen Minuten erfolgen. Es kann sich beispielsweise um eine UV-Lampe mit einer Leistung von ca. 50 W und einem Emissionsmaximum von zwischen 340 nm und 380 nm handeln, sodass die Härtungsreaktion ohne spezielle Sicherheitsanforderungen durchgeführt werden kann. Die Bildung der Beschichtung kann auch unter Tageslicht erfolgen.

Gegebenenfalls kann eine Menge des Photoinitiators, die im oberen Teil des angegebenen Bereichs liegt, insbesondere bei Verwendung von TPO, eine Verschiebung dessen Absorptionsmaximums bewirken, sodass die Härtungsreaktion ohne zusätzliche UV-Bestrahlung erfolgen kann.

Gegebenenfalls kann der Zusammensetzung zusätzlich ein Vernetzungsmittel zugegeben werden, um die mechanischen Eigenschaften der Beschichtung weiter zu verbessern. Es kann sich bei dem Vernetzungsmittel um Pentaerythritol-tetra(3-mercaptopropionat) (PETMP) handeln.

Die Konzentration des Vernetzungsmittels kann wenigstens 0,2 Gew.-% oder wenigstens 0,5 Gew.-%, jedoch typischerweise weniger als 1 Gew.-%, in Bezug auf das Gesamtgewicht der Zusammensetzung betragen.

In einem Aspekt der Zusammensetzung sind sowohl Photoinitiator als auch Vernetzungsmittel enthalten.

In der Zusammensetzung können noch weitere Additive enthalten sein.

Gegebenenfalls kann ein Antikoagulans zugegeben werden, bei dem es sich um Natrium-4-butylnaphthalin-1-sulfonat handeln kann. Dadurch kann die Langzeitstabilität der Zusammensetzung verbessert werden.

Gegebenenfalls kann ein Farbstoff zugegeben werden, beispielsweise ein schwarzer, blauer oder ein anderer Farbstoff. Dadurch kann die Lichtundurchlässigkeit weiter verbessert werden und auch ästhetische Anpassungen sind möglich. Der Farbstoff kann beispielsweise ein Pigmentfarbstoff sein.

Gegebenenfalls kann ein Duftstoff zugegeben werden. Dadurch kann der typischerweise auftretende, oft als unangenehm empfundene, Geruch von Kautschuk überdeckt werden. Bei dem Duftstoff kann es sich beispielsweise um Zirbenkieferöl oder Zitronengrasöl handeln.

Die Zusammensetzung wie hier beschrieben kann in vorteilhafter Weise zur Herstellung einer Beschichtung verwendet werden. Die Beschichtung kann auf unterschiedliche Oberflächen aufgetragen werden, insbesondere auf solche Oberflächen, die glatt sind. Bei der Oberfläche kann es sich um Glas, Kunststoff, Metall oder ein anderes Material handeln. Es wurde gefunden, dass die Beschichtung meist in einem Stück von der Oberfläche abgelöst werden kann, ohne weitere Hilfsmittel zu benötigen. Die einfache und rasche Möglichkeit der Applikation und Entfernung macht eine derartige Beschichtung für den temporären Einsatz besonders gut geeignet.

Weitere Vorteile können sein: Flexibilität, da rückstandsfrei abziehbar bzw. ablösbar, wodurch der Einsatz in diversen Bereichen möglich ist, auch unterwegs und ohne spezielle Vorrichtungen oder komplizierte Hilfsmittel; einfache und schnelle Anwendung, keine Vorkenntnisse oder komplizierte Technik nötig; umweltfreundlich, da insbesondere nicht toxisch und biobasiert, wobei kein Mikroplastik enthalten ist; Verwendbarkeit im medizinischen Bereich oder im Haushalt z.B. bei Gerätedisplays, mobilen Geräten, Wohnbereichen, Fahrzeugen, oder Brillen.

Die Erfindung betrifft daher auch eine solche Beschichtung sowie einen Gegenstand, der zumindest teilweise mit einer solchen Beschichtung versehen ist. Bei dem Gegenstand kann es sich in einem Beispiel um eine Brille handeln, bei der beispielsweise ein Brillenglas mit der Beschichtung versehen ist.

Die Beschichtung kann insbesondere durch Aufsprühen der Zusammensetzung auf die gewünschte Oberfläche hergestellt werden. Nach dem Aufsprühen erfolgt typischerweise ein Trocknungsschritt und/oder ein Härtungsschritt, gegebenenfalls unter Verwendung von UV-Strahlung.

Das Sprühen kann grundsätzlich mit jeder zum Versprühen von Flüssigkeiten geeigneten Vorrichtungen erfolgen, beispielsweise mit einem Pumpsprühgerät oder mit einem Drucksprühgerät. Als vorteilhaft hat sich jedoch die Verwendung einer Airbrush-Vorrichtung erwiesen, die die Herstellung eines besonders feinen Sprühnebels ermöglicht.

Eine Airbrush-Vorrichtung umfasst typischerweise ein Materialreservoir, in dem die flüssige Zusammensetzung vorgelegt werden kann. Das Materialreservoir steht mit einer Sprühdüse in fluidleitender Verbindung, wobei ein Kompressor vorgesehen ist, um einen Luftstrom zu erzeugen, durch den das im Materialreservoir befindliche Material angesaugt und in weiterer Folge zerstäubt wird. Typischerweise ist an der Sprühdüse eine in ihrer Position anpassbare Nadel vorgesehen, deren Stellung mit einer Stelleinrichtung angepasst werden kann.

Die Erfindung betrifft auch ein Verfahren zur Herstellung einer Beschichtung, wobei die Zusammensetzung auf eine Oberfläche eines zu beschichtenden Gegenstands aufgesprüht wird.

Eine hier beschriebene Beschichtung kann für unterschiedliche Verwendungszwecke eingesetzt werden. Die Erfindung betrifft daher gegebenenfalls die Verwendung einer solchen Beschichtung als insbesondere temporärer Sichtschutz, Blendschutz, UV-Schutz, und/oder Temperaturschutz. Die Anwendungsfälle können aus einem oder mehreren der folgenden ausgewählt sein, sind aber nicht darauf beschränkt:
- im Haushalt, beispielsweise auf Fenstern, Türen Duschkabinen, transparenten Bauteilen eines Wintergartens
- in oder an einem Fahrzeug (z.B. Wohnmobil, Campingfahrzeug), beispielsweise einer Seitenscheibe, einer Frontscheibe, einer Heckscheibe, oder einem Glasschiebedach
- in öffentlichen Einrichtungen, wie beispielsweise Toilettenanlagen
- an Brillen und/oder anderen optischen Vorrichtungen, beispielsweise bei Anisometropie, Amblyopie, Doppelbildern aufgrund von ophthalmologischen und neurologischen Ursachen, Zuständen nach Operationen, bei Traumata, Aniridie, Mydriasis oder Uveitis, insbesondere zur Verhinderung von Blendung und Schwindel / Doppelbildern
- zur Abschirmung eines Lernbereiches oder Reduktion des Gesichtsfeldes bei ADHS und Konzentrationsstörungen, insbesondere zur Verbesserung des Lerneffekts
- in medizinischen Anwendungen, beispielsweise im Bereich von Krankenhäusern, Zahnarzträumen, oder Arztpraxen
- in Arbeitsbereichen, beispielsweise in Banken zum Diskretionsschutz und der Verbesserung der Vertraulichkeit,
- auf Schreibtafeln, beispielsweise Whiteboards, um eine Löschsperre zu bilden und Inhalte temporär zu schützen
- im Polizei- und Sicherheitsdienst, beispielsweise um Tätern, Verdächtigen oder kontrollierten Personen die Sicht nehmen
- bei Veranstaltungen auf Bühnen oder anderen Präsentationsorten beispielsweise zur temporären Veränderung der Lichtverhältnisse, als Blendschutz, oder zur Herstellung eines Abdunklungseffekts
- zur Verbesserung der Kindersicherheit, beispielsweise als Sichtschutz, Ruhe, Schlafhygiene, Blendschutz (z.B. Kinderzimmer, Kindersitz in Fahrzeugen) Stillschutz in öffentlichen Anlagen, Ruhezonen
- zur Verbesserung der Barrierefreiheit, beispielsweise für Personen mit Einschränkungen, z.B. ADHS-Reizüberflutungssyndromen
- zum Abschirmen von LCD-Displays auf Maschinen und Geräten, beispielsweise Herden, Mikrowellen, Uhren, Radios, mobilen Geräten, insbesondere zur Licht- und Schlafhygiene nachts oder als Blendschutz

In diesen und gegebenenfalls auch weiteren Anwendungen kann die hier beschriebene Beschichtung eine kostengünstige und temporäre Alternative beispielsweise zu abdunkelbaren Smart-Gläsern sein.

Die Erfindung betrifft insbesondere eine sprühbare Zusammensetzung enthaltend oder bestehend aus einer wässrigen Kautschuk-Suspension, Polyvinylpyrrolidon sowie gegebenenfalls einem oder mehreren Additiven, wobei bevorzugt vorgesehen ist, dass die Zusammensetzung bezogen auf ihre Gesamtmasse zwischen 20 Gew.-% und 45 Gew.-% Kautschuk sowie von 0,5 Gew.-% bis 10 Gew.-%, insbesondere von 1,0 Gew.-% bis 5 Gew.-%, Polyvinylpyrrolidon enthält.

Gegebenenfalls ist vorgesehen, dass der Kautschuk Naturkautschuk ist, und/oder dass die Kautschuk-Suspension Latexmilch ist, die aus von Hevea brasiliensis gewonnen ist.

Gegebenenfalls ist vorgesehen, dass als Additiv ein Photoinitiator enthalten ist, und/oder dass als Additiv ein Vernetzungsmittel enthalten ist.

Gegebenenfalls ist vorgesehen, dass der Photoinitiator, sofern enthalten, Ethyl-(2,4,6-trimethyobenzoyl)-phenylphosphinat ist, und/oder, dass das Vernetzungsmittel, sofern enthalten, Pentaerythritol-tetra(3-mercaptopropionat) ist.

Gegebenenfalls ist vorgesehen, dass Ethyl-(2,4,6-trimethyobenzoyl)-phenylphosphinat und Pentaerythritol-tetra(3-mercaptopropionat) als Vernetzungsmittel enthalten sind, wobei Ethyl-(2,4,6-trimethyobenzoyl)-phenylphosphinat in einem Gehalt von 0,2 Gew.-% bis 1,0 Gew.-% und Pentaerythritol-tetra(3-mercaptopropionat) in einem Gehalt von 0,2 Gew.-% bis 1,0 Gew.-% enthalten ist, wobei sich die Gehalte auf die Gesamtmasse der Zusammensetzung beziehen.

Gegebenenfalls ist vorgesehen, dass eines oder mehrere der folgenden Additive enthalten sind: ein Emulgator, wie beispielsweise Tween 20; ein Antikoagulans, wie beipsielsweise Natrium-4-butylnaphthalin-1-sulfonat; ein Farbstoff; ein Duftstoff.

Gegebenenfalls ist vorgesehen, dass das Polyvinylpyrrolidon ein Molekulargewicht von höchstens 10.000 g/mol aufweist.

Gegebenenfalls ist vorgesehen, dass folgende Komponenten enthalten sind: von 25 Gew.-% bis 40 Gew.-% Naturkautschuk; von 1,0 Gew.-% bis 5,0 Gew.-% Polyvinylpyrrolidon; von 0,2 Gew.-% bis 1,0 Gew.-% Ethyl-(2,4,6-trimethyobenzoyl)-phenylphosphinat; von 0,2 Gew.-% bis 1,0 Gew.-% Pentaerythritol-tetra(3-mercaptopropionat) in einem Gehalt von 0,2 Gew.-% bis 1,0 Gew.-%; gegebenenfalls weitere Additive und der Rest auf 100 Gew.-% Wasser wobei sich alle Gew.-% auf die Gesamtmasse der Zusammensetzung beziehen.

Die Erfindung betrifft gegebenenfalls auch eine Beschichtung hergestellt aus einer Zusammensetzung wie hier beschrieben, wobei die Beschichtung durch Aufsprühen der Zusammensetzung auf eine Oberfläche und durch anschließendes Trocknen und/oder Aushärten erhalten wird.

Die Erfindung betrifft gegebenenfalls auch einen Gegenstand mit einer Oberfläche, die zumindest teilweise mit einer Beschichtung wie hier beschrieben versehen ist.

Die Erfindung betrifft gegebenenfalls auch eine die Oberfläche Glas oder Kunststoff umfasst.

Gegebenenfalls ist vorgesehen, dass der Gegenstand eine Sehhilfe, insbesondere eine Brille ist, wobei die mit der Beschichtung versehene Oberfläche die Oberfläche eines Brillenglases ist.

Die Erfindung betrifft gegebenenfalls auch ein Verfahren zur zumindest teilweisen Abdeckung der Oberfläche eines Gegenstandes mit einer Beschichtung, wobei das Verfahren folgende Schritte umfasst: Bereitstellen einer Zusammensetzung wie hier beschrieben; Aufsprühen der Zusammensetzung auf die abzudeckende Oberfläche mit einer Sprühvorrichtung; Trocknen und gegebenenfalls Aushärten der Zusammensetzung zum Erhalten der Beschichtung.

Gegebenenfalls ist vorgesehen, dass das Aufsprühen mit einer Airbrush-Vorrichtung erfolgt.

Gegebenenfalls ist vorgesehen, dass das Trocknen und Aushärten der Beschichtung unter Bestrahlung mit UV-Licht und/oder unter Tageslicht erfolgt.

Weitere Merkmale der Erfindung ergeben sich aus den Ausführungsbeispielen und den Patentansprüchen. Nachfolgend wird die vorliegende Erfindung anhand exemplarischer Ausführungsbeispiele im Detail erörtert. Diese Ausführungsbeispiele dienen lediglich der Illustration und sollen den durch die Patentansprüche definierten Schutzbereich nicht einschränken.

### Auswahl der Basiskomponente der Zusammensetzung

In einem ersten Schritt wurde eine für die gewünschte Anwendung geeignete Basiskomponente einer sprühbaren Zusammensetzung ausgewählt.

Aufgrund von Überlegungen, die grundsätzlich für deren Eignung sprechen, wurden folgende Basiskomponenten untersucht: Naturlatex (Kautschuk), Methylcellulose und Polyvinylpyrrolidon.

Es erfolgte ein Aufsprühen entsprechender Zusammensetzungen auf die Oberflächen von Kunststoff-Brillengläsern.

Die Basiskomponenten Methylcellulose und Polyvinylpyrrolidon wurden als ungeeignet beurteilt und daher verworfen. Dies, da aus Methylcellulose hergestellten Beschichtungen inhomogen waren und aus Polyvinylpyrrolidon bestehende Beschichtungen zwar homogen, aber wasserlöslich, waren. Überdies wäre bei der Verwendung von reinem Polyvinylpyrrolidon zur Herstellung einer opaken Beschichtung ein Zuschlagstoff erforderlich, was als nachteilig angesehen wurde.

Naturlatex zeigte gute Filmbildungseigenschaften mit opaker Erscheinung (d.h. undurchsichtig) und keiner nennenswerten Wasserlöslichkeit. Ferner ließen sich die erzeugten Beschichtungen einfach von der Oberfläche abziehen. Naturlatex wurde daher für die Verwendung als Basiskomponente als geeignet erachtet und weiteren Untersuchungen unterzogen.

### Auswahl der Sprühvorrichtung

Ferner wurde eine Auswahl der Spühvorrichtung durchgeführt. Dabei erfolgte eine Evaluierung der Sprühbarkeit von Naturlatexmilch ohne weitere Zusätze in einem Hand-Pumpzerstäuber, einer Airbrush-Vorrichtung mit Kompressor und einer unter Druck gesetzten wiederbefüllbaren Sprühdose.

Die Airbrush-Vorrichtung mit Kompressor wurde aufgrund des gleichmäßigen und anpassbaren Sprühergebnisses als geeignetste Vorrichtung befunden. Zusätzlich wurden dort im Vergleich zu den anderen Vorrichtungen keine Probleme mit einem Verstopfen der Sprühdüse beobachtet.

### Zusammensetzungen mit Naturlatex als Basiskomponente

Nach der Auswahl der geeigneten Basiskomponente und einer Sprühvorrichtung wurden unterschiedliche Zusammensetzungen bereitgestellt, daraus Beschichtungen hergestellt und deren mechanische Eigenschaften untersucht.

Die Zusammensetzungen sind in Tabelle 1 angegeben.

**Tabelle 1: Untersuchte Zusammensetzungen**

| | | Naturlatex¹ | PVP² | Tinte³ | TPO⁴ | PETMP⁵ |
|---|---|---|---|---|---|---|
| erfindungsgemäß | E1 | 9,9 g | 0,1 g | 0,1 g | -- | -- |
| | E2 | 9,8 g | 0,2 g | -- | -- | -- |
| | E3 | 9,5 g | 0,5 g | 1,0 g | -- | -- |
| | E4 | 9,9 g | 0,1 g | 1,0 g | 0,063 g | 0,060 g |
| | E5 | 9,5 g | 0,5 g | 1,0 g | 0,060 g | 0,065 g |
| nicht erfindungsgemäß | NE1 | 10 g | -- | -- | -- | -- |
| | NE2 | 10 g | -- | -- | 0,06 g | 0,06 g |

| | | | | | | |
|---|---|---|---|---|---|---|
| ¹Milchsaft von *Hevea brasiliensis* mit einem Kautschuk-Anteil von etwa 35 Gew.-% Trockenmasse ²Polyvinylpyrrolidon mit einem Molekulargewicht zwischen 2.000 g/mol und 3.000 g/mol, außer in E5 mit einem Molekulargewicht von ca. 10.000 g/mol ³Tätowiertinte mit schwarzem Pigment ⁴Ethyl-(2,4,6-trimethyobenzoyl)-phenylphosphinat (= Photoinitiator) ⁵Pentaerythritol-tetra(3-mercaptopropionat) (= Vernetzungsmittel) | | | | | | |

Die in Tabelle 1 angegebenen Zusammensetzungen wurden zu Beschichtungen verarbeitet. Dabei wurden die Zusammensetzungen nach dem Aufsprühen luftgetrocknet.

In weiterer Folge wurden die mechanischen Eigenschaften der hergestellten Beschichtungen untersucht. Die Ergebnisse sind in Tabelle 2 angegeben.

**Tabelle 2: E-Modul und Dehnbarkeit der Beschichtungen**

| | | E-Modul (MPa) | Bruchdehnung (%) |
|---|---|---|---|
| erfindungsgemäß | E1 | 2,74 | ca. 800 |
| | E2 | 1,86 | ca. 800 |
| | E3 | 6,54 | ca. 800 |
| | E4 | 9,16 | ca. 750 |
| | E5 | | ca. 600 |
| nicht erfindungsgemäß | NE1 | 1,30 | ca. 570 |
| | NE2 | 1,75 | ca. 480 |

Die Ergebnisse zeigen eine Erhöhung des E-Moduls, also eine Verbesserung der mechanischen Festigkeit, der Beschichtung bei Verwendung der erfindungsgemäßen Zusammensetzungen im Vergleich zu den nicht erfindungsgemäßen Zusammensetzungen. Auch die Bruchdehnung ist bei den erfindungsgemäßen Zusammensetzungen verbessert.

Durch Zugabe von Photoinitiator und Vernetzungsmittel kann das E-Modul drastisch gesteigert werden, wodurch bei der Anwendung insbesondere eine höhere Kratzfestigkeit der Beschichtung bewirkt wird.

Alle Beschichtungen konnten in einem Stück und im Wesentlichen rückstandsfrei von den Oberflächen abgezogen werden.

### Lichtdurchlässigkeit der Beschichtungen

Es wurde die Lichtdurchlässigkeit der erfindungsgemäßen Beschichtungen untersucht. Alle Beschichtungen waren weitgehend lichtundurchlässig mit Absorptionswerten zwischen 99,85 und 98,56 %, abhängig von der betrachteten Wellenlänge. Dies indiziert eine gute Eignung für die erfindungsgemäßen Anwendungen.

## Patentansprüche

1. **Sprühbare Zusammensetzung** enthaltend oder bestehend aus einer wässrigen Kautschuk-Suspension, Polyvinylpyrrolidon sowie gegebenenfalls einem oder mehreren Additiven, **dadurch gekennzeichnet, dass** die Zusammensetzung bezogen auf ihre Gesamtmasse zwischen 20 Gew.-% und 45 Gew.-% Kautschuk sowie von 0,5 Gew.-% bis 10 Gew.-%, insbesondere von 1,0 Gew.-% bis 5 Gew.-%, Polyvinylpyrrolidon enthält.

2. Zusammensetzung nach Anspruch 1, **dadurch gekennzeichnet, dass** der Kautschuk Naturkautschuk ist, und/oder dass die Kautschuk-Suspension Latexmilch ist, die aus von *Hevea brasiliensis* gewonnen ist.

3. Zusammensetzung nach Anspruch 1 oder 2, **dadurch gekennzeichnet, dass** als Additiv ein Photoinitiator enthalten ist, und/oder dass als Additiv ein Vernetzungsmittel enthalten ist.

4. Zusammensetzung nach Anspruch 3, **dadurch gekennzeichnet, dass** der Photoinitiator, sofern enthalten, Ethyl-(2,4,6-trimethyobenzoyl)-phenylphosphinat ist, und/oder, dass das Vernetzungsmittel, sofern enthalten, Pentaerythritoltetra(3-mercaptopropionat) ist.

5. Zusammensetzung nach Anspruch 4, **dadurch gekennzeichnet, dass** Ethyl-(2,4,6-trimethyobenzoyl)-phenylphosphinat und Pentaerythritol-tetra(3-mercaptopropionat) als Vernetzungsmittel enthalten sind, wobei Ethyl-(2,4,6-trimethyobenzoyl)-phenylphosphinat in einem Gehalt von 0,2 Gew.-% bis 1,0 Gew.-% und Pentaerythritol-tetra(3-mercaptopropionat) in einem Gehalt von 0,2 Gew.-% bis 1,0 Gew.-% enthalten ist, wobei sich die Gehalte auf die Gesamtmasse der Zusammensetzung beziehen.

6. Zusammensetzung nach einem der Ansprüche 1 bis 5, **dadurch gekennzeichnet, dass** eines oder mehrere der folgenden Additive enthalten sind:
- ein Emulgator, wie beispielsweise Tween 20,
- ein Antikoagulans, wie beipsielsweise Natrium-4-butylnaphthalin-1-sulfonat,
- ein Farbstoff,
- ein Duftstoff.

7. Zusammensetzung nach einem der Ansprüche 1 bis 6, **dadurch gekennzeichnet, dass** das Polyvinylpyrrolidon ein Molekulargewicht von höchstens 10.000 g/mol aufweist.

8. Zusammensetzung nach einem der Ansprüche 1 bis 7, **dadurch gekennzeichnet, dass** folgende Komponenten enthalten sind:
- von 25 Gew.-% bis 40 Gew.-% Naturkautschuk,
- von 1,0 Gew.-% bis 5,0 Gew.-% Polyvinylpyrrolidon,
- von 0,2 Gew.-% bis 1,0 Gew.-% Ethyl-(2,4,6-trimethyobenzoyl)-phenylphosphinat,
- von 0,2 Gew.-% bis 1,0 Gew.-% Pentaerythritol-tetra(3-mercaptopropionat) in einem Gehalt von 0,2 Gew.-% bis 1,0 Gew.-%,
- gegebenenfalls weitere Additive und der Rest auf 100 Gew.-% Wasser wobei sich alle Gew.-% auf die Gesamtmasse der Zusammensetzung beziehen.

9. **Beschichtung** hergestellt aus einer Zusammensetzung nach einem der Ansprüche 1 bis 8, wobei die Beschichtung durch Aufsprühen der Zusammensetzung auf eine Oberfläche und durch anschließendes Trocknen und/oder Aushärten erhalten wird.

10. **Gegenstand** mit einer Oberfläche, die zumindest teilweise mit einer Beschichtung nach Anspruch 9 versehen ist.

11. Gegenstand nach Anspruch 10, **dadurch gekennzeichnet, dass** die Oberfläche Glas oder Kunststoff umfasst.

12. Gegenstand nach Anspruch 10 oder 11, **dadurch gekennzeichnet, dass** der Gegenstand eine Sehhilfe, insbesondere eine Brille ist, wobei die mit der Beschichtung versehene Oberfläche die Oberfläche eines Brillenglases ist.

13. **Verfahren** zur zumindest teilweisen Abdeckung der Oberfläche eines Gegenstandes mit einer Beschichtung, wobei das Verfahren folgende Schritte umfasst:
- Bereitstellen einer Zusammensetzung nach einem der Ansprüche 1 bis 8,
- Aufsprühen der Zusammensetzung auf die abzudeckende Oberfläche mit einer Sprühvorrichtung,
- Trocknen und gegebenenfalls Aushärten der Zusammensetzung zum Erhalten der Beschichtung.

14. Verfahren nach Anspruch 13, **dadurch gekennzeichnet, dass** das Aufsprühen mit einer Airbrush-Vorrichtung erfolgt.

15. Verfahren nach Anspruch 13 oder 14, **dadurch gekennzeichnet, dass** das Trocknen und Aushärten der Beschichtung unter Bestrahlung mit UV-Licht und/oder unter Tageslicht erfolgt.
